# EUROPÄISCHE PATENTSCHRIFT

(11) **EP 0 749 379 B1**
(45) Veröffentlichungstag und Bekanntmachung des Hinweises auf die Patenterteilung: **22.10.1997**
(21) Anmeldenummer: 95911213.7
(22) Anmeldetag: 03.03.1995
(51) Int. Cl.: B60S 3/04

(54) **REIFENREINIGUNGSVORRICHTUNG FÜR ROLLSTÜHLE**
TYRE CLEANING DEVICE FOR WHEELCHAIRS
DISPOSITIF DE NETTOYAGE DES PNEUMATIQUES DE FAUTEUILS ROULANTS

(30) Priorität: 05.03.1994 DE 4407412; 23.09.1994 DE 9415423 U
(43) Veröffentlichungstag der Anmeldung: 27.12.1996
(73) Patentinhaber: Diakonische Werkstätten für Behinderte Potsdam GmbH, 14482 Potsdam (DE)
(72) Erfinder: HEISE, Thorsten, D-65207 Wiesbaden (DE)
(74) Vertreter: Hengelhaupt, Jürgen, Dipl.-Ing.
(86) Internationale Anmeldenummer: DE9500314
(87) Internationale Veröffentlichungsnummer: WO9523715

(56) Entgegenhaltungen:
- FR-A- 2 236 697
- US-A- 3 312 991
- US-A- 3 628 212
- US-A- 3 729 763
- US-A- 4 233 703
- US-A- 5 133 375
- US-A- 5 285 802

## Beschreibung

Die Erfindung betrifft eine Reifenreinigungsvorrichtung für Rollstühle.

Rollstühle werden in der Regel durch behinderte Personen benutzt und müssen sowohl innerhalb als auch außerhalb von Gebäuden die Funktion des Gehapparates ersetzen oder zumindest zeitweilig entlasten. Anders als bei nicht behinderten Personen kann beim Eintritt in ein Gebäude der Rollstuhl nicht einfach wie ein normales Paar Schuhe gewechselt werden, sondern muß bei verschmutzten Reifen gereinigt und auch im Gebäudebereich weiterbenutzt werden. Zum Entfernen, insbesondere von groben Verschmutzungen wurden bisher Putzlappen oder Bürsten verwendet, die in aufwendiger Weise um den vollständigen Radumfang geführt wurden, was häufig dem Behinderten ohne fremde Hilfe nicht möglich war. Der bei der Reinigung herunterfallende Schmutz mußte darüber hinaus nachträglich beseitigt werden.

Die US-A-5 133 375 zeigt eine Reinigungsvorrichtung für Rollstühle, die jedoch nur, für von Hand geschobene Rollstühle gedacht ist. Der Rollstuhl muß ohne Behinderten von einem Nichtbehinderten in einen Behälter eingebracht werden. Es ist auch nicht gesagt, daß wenigstens eine Rolle (48, 49), siehe Figur 7 der US-A-5 133 375, in einen Freilaufzustand schaltbar ist.

Es ist daher Aufgabe der Erfindung, eine Reifenreinigungsvorrichtung zu schaffen, mit der die Reifen von Rollstühlen ohne fremde Hilfe zügig und zuverlässig gereinigt werden können.

Die Erfindung stellt eine Reifenreinigungsvorrich-tung sowohl für elektrisch angetriebene als auch von Hand geschobene Rollstühle zur Verfügung, umfassend: wenigstens zwei Rollen, welche zumindest einen Rollstuhlreifen abstützen, wobei wenigstens eine Rolle zum Rotieren der Reifen wahlweise antreibbar oder in einen Freilaufzustand schaltbar ist, und weingstens eine, zumindest einem Rollstuhlreifen zugeordnete Reinigungseinrichtung.

Ein wesentlicher Vorteil der Erfindung besteht darin, daß einem behinderten Rollstuhlfahrer mehr Freiheiten gegeben werden, da zum Reinigen von Rollstuhlreifen keine Hilfspersonen benötigt werden.

Um die Reifenreinigungsvorrichtung flexibel an Rollstuhlreifen mit unterschiedlichem Durchmesser anpassen zu können, sind mehrere Rollen in der Plattform paarweise mit zunehmendem Abstand zueinander in einer Mulde angeordnet.

Da es sowohl manuell als auch elektrisch angetriebene Rollstühle gibt, ist es zweckmäßig, daß jede Rolle wahlweise antreibbar oder freilaufend geschaltet werden kann.

Damit der Rollstuhl nicht unerwünschterweise aus der Reifenreinigungsvorrichtung getrieben wird, können sich gegenüberliegende Rollen mit unterschiedlicher Drehzahl drehen, um so eine vertikale, zur Plattform gerichtete Kraftkomponente zu erzeugen. Auf diese Weise werden Rollstühle sicher in der Reifenreinigungsvorrichtung gehalten.

Eine der Reinigungseinrichtungen ist bei einer ersten Ausführungsform zweckmäßigerweise ein Reinigungsband, das entgegengesetzt zur Drehrichtung der Rollen drehbar ist und den Reifen von unten her berührt.

Um die Reinigung effizienter und die Vorrichtung anpassungsfähiger zu gestalten, setzt sich das Reinigungsband aus mehreren, auf einer Antriebskette beweglich gelagerten Bürstensegmenten zusammen, wobei die Bürstensegmente vorzugsweise einen elliptischen Querschnitt aufweisen und um eine Drehachse rotieren, die senkrecht zur Rollenachse steht.

Um den gesamten Reifenmantel zuverlässig von Verschmutzungen befreien zu können, können jedem Reifen drei Reinigungseinrichtungen zugeordnet sein, die entlang der Rollenachse im Abstand zueinander und in der Höhe versetzt derart angeordnet sind, daß jeweils die beiden außenliegenden Reinigungseinrichtungen in einer Ebene liegen, die höher liegt als die der mittleren Reinigungseinrichtung.

Damit sich die Bürstensegmente selbst reinigen können, sind zumindest zwei der Reinigungseinrichtungen derart angeordnet, daß sich die Bürstensegmente im betriebsfreien Zustand wenigstens beim Rotieren teilweise überlappen.

Um die Reinigungseinrichtungen unterschiedlichen Reifendicken anpassen zu können, können bei der ersten Ausführungsform die Reinigungseinrichtungen entsprechend zueinander verstellt werden.

Bei einer zweiten Ausführungsform umfaßt die Reinigungseinrichtung eine sich im wesentlichen in entgegengesetzter Richtung zum Reifen drehende erste Rundbürste, die in zuverlässiger Weise in Rollrichtung verlaufende Profilanteile des Rollstuhlreifens zu säubern vermag.

Der Aufbau dieser ersten Rundbürste aus mehreren scheibenförmigen Bürstensegmenten gestattet den flexiblen Austausch der scheibenförmigen Bürstensegmente und vereinfacht deren Wartung.

Weitere zweite Rundbürsten, die drehbar derart gehalten sind, daß deren Rotation zu einer Putzwirkung im Seitenwandbereich und/oder unteren Ablaufbereich des Rollstuhlreifens führt, säubern quer verlaufende Profilanteile des Rollstuhlreifens sowie dessen Seitenwände.

Mit mehreren, in Reihe nebeneinander angeordneten, sich im wesentlichen senkrecht zur ersten Rundbürste drehenden zweiten Rundbürsten kann auf eine Justierung in Bezug auf die Rollstuhlreifenbreite verzichtet werden. Das vollständige Erfassen einer Breite, die über die bekannten Rollstuhlbreiten hinausgeht, macht die Vorrichtung flexibel einsetzbar für jeglichen Rollstuhltyp.

Das Ein- und Ausschalten sowie die Bedienung der Reifenreinigungsvorrichtung kann über eine Bedienkonsole, die von einem Rollstuhl aus erreichbar ist, erfolgen.

Um den Einsatzort der Reifenreinigungsvorrichtung nicht unnötigerweise zu verschmutzen, ist eine herausnehmbare Auffangwanne unterhalb der Reinigungseinrichtungen angeordnet.

Die Erfindung wird nachfolgend anhand der beiliegenden Zeichnungen näher erläutert. Es zeigen:
- Fig. 1: eine Seitenansicht der mit einer Mulde versehenen Plattform einer ersten Ausführungsform der erfindungsgemäßen Reifenreinigungsvorrichtung,
- Fig. 2: eine Seitenansicht eines mittels zwei Antriebsrollen bewegten Rollstuhlreifens zusammen mit einer Reinigungseinrichtung gemäß der ersten Ausführungsform, und
- Fig. 3: eine Ansicht entlang der Linie A-A nach Fig. 2,
- Fig. 4: eine Seitenansicht der zweiten erfindungsgemäßen Ausführungsform, in teilweise aufgebrochener Darstellung,
- Fig. 5: ein vergrößertes Detail der in Fig. 4 dargestellten Ausführungsform entlang der oberen Hälfte der Schnittlinie B-B, ohne jedoch die Antriebsmotore zu zeigen,
- Fig. 6: einen Blick auf die Reinigungsvorrichtung der zweiten Ausführungsform von oben bei weggelassenen Seiten-, Bodenwänden sowie Abdeckblechen,
- Fig. 7 und 8: die Öffnung und Entnahme der herausnehmbaren Auffangwanne.

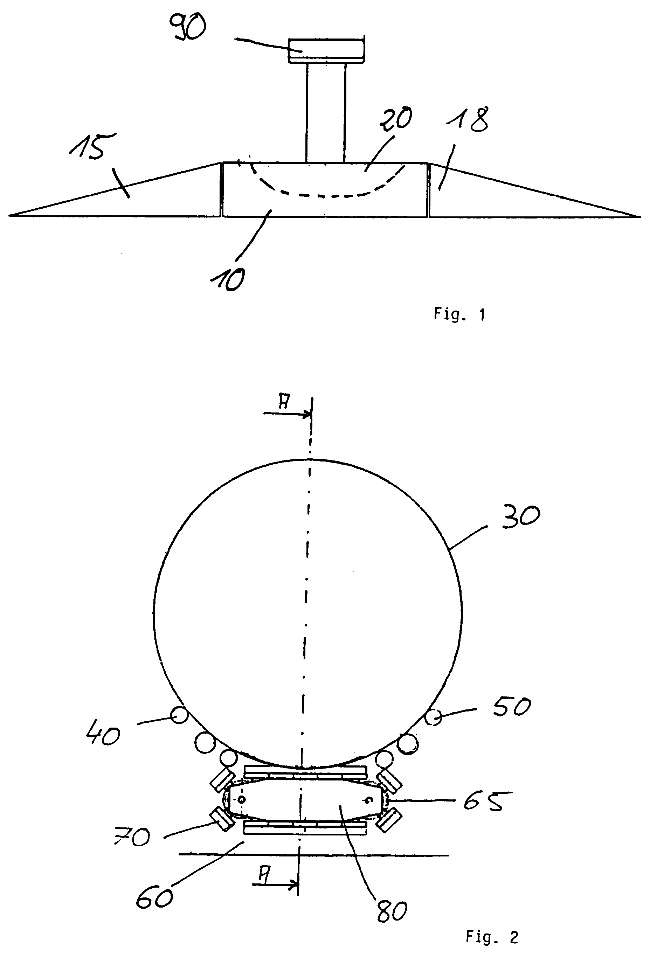

Fig. 1 zeigt die Seitenansicht einer Plattform 10 einer ersten erfindungsgemäßen Ausführungsform der Reifenreinigungsvorrichtung. Zwei An- oder Auffahrrampen 15 und 18 begrenzen die Plattform 10. Die beiden Rampen 15 und 18 weisen einen Neigungswinkel von etwa 8° auf, der so gewählt ist, daß ein auf die Plattform 10 auffahrender Rollstuhl nicht nach hinten kippen kann. In die Plattform 10 ist eine quer zur Auffahrrichtung verlaufende Mulde 20 zur Aufnahme von Rollstuhlreifen 30 vorgesehen. In vorteilhafter Weise erstreckt sich die Mulde 20 über nahezu die gesamte Breite der Plattform 10. Die vorzugsweise rechteckförmig ausgebildete Mulde 20 wird seitlich durch den oberen Rand der Plattform 10 begrenzt, um so ein seitliches Herauswandern des Rollstuhls während des Reinigens zu vermeiden. Anstelle einer durchgehenden Mulde 20 können zwei gesonderte Mulden in der Plattform 10 vorgesehen sein, die entsprechend dem Abstand der Rollstuhlreifen oder -räder 30 angeordnet sind.

In der Mulde 20 sind beispielsweise sechs Rollen 40, 50 angeordnet. Jeweils zwei Rollen oder Walzen liegen in einer horizontalen Ebene, wobei der Abstand zwischen den Rollen 40, 50 eines Rollenpaars mit wachsendem Abstand zur Plattform 10 zunimmt. Die Rollen 40, 50 sind somit über dem Umfang eines gedachten Kreissegments angeordnet. Auf diese Weise ist es möglich, Reifen 30 mit unterschiedlichem Durchmesser in der Mulde 20 aufzunehmen (s. Fig. 2). Die Rollen 40, 50 erstrecken sich über die gesamte Breite der Mulde 20. Sie können alternativ aber auch mehrstückig und kürzer und jedem Reifen 30 einzeln zugeordnet sein. Jede Rolle oder Walze 40, 50 wird auf bekannte Art und Weise vorzugsweise von geregelten Gleichstrommotoren angetrieben.

Damit die Reifenreinigungsvorrichtung sowohl für elektrisch angetriebene Rollstühle als auch für von Hand geschobene Rollstühle benutzt werden kann, kann jede Rolle 40, 50 im Freilauf betrieben werden, d.h. die Gleichstrommotoren sind abgeschaltet oder im Leerlauf. Um zu verhindern, daß während des Reinigungsvorgangs der Rollstuhl aus der Mulde 20 herausgedrückt werden kann, können gegenüberliegende Rollen 40, 50 mit unterschiedlicher Drehzahl oder unterschiedlichem Drehmoment angetrieben werden, um so eine vertikale, zur Plattform 10 gerichtete Kraftkomponente zu erzeugen. Auf diese Art und Weise wird der Rollstuhl in Richtung der Plattform 10 gezogen und in der Mulde 20 festgehalten.

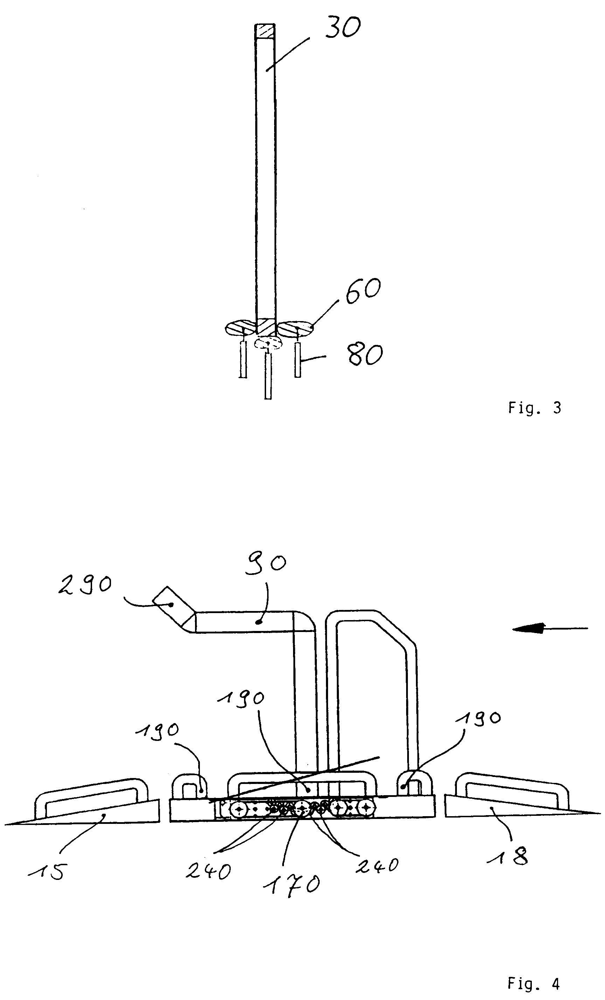

Fig. 2 zeigt eine Reinigungseinrichtung 60 einer ersten Ausführungsform in Form eines Reinigungsbandes. Das Reinigungsband selbst setzt sich aus mehreren, auf einer Antriebskette 65 beweglich gelagerten Bürstensegmenten 70 zusammen. Die Antriebskette 65 wird über geregelte Gleichstrommotoren angetrieben, wobei die Bewegungsrichtung zur Drehrichtung der Rollen 40, 50 entgegengesetzt ist. Wie aus Fig. 2 ersichtlich, ist die Reinigungseinrichtung 60 unterhalb der Antriebsrollen 40, 50 angeordnet und berührt den Reifen 30 im Bereich dessen unterster Tangente. Das Profil der Bürstensegmente 70 ist scheibenförmig und weist insbesondere einen elliptischen Querschnitt auf, damit bei dem eigentlichen Reinigungsvorgang der Schmutz seitlich wegtransportiert wird. Um die Effizienz beim Reinigen zu erhöhen, wird jedes Bürstensegment 70 über einen Gleichstrommotor in Drehung versetzt, wobei die Drehachse der Bürstensegmente senkrecht zur Rollenachse steht. Fig. 3 zeigt den Ausschnitt einer Reifenreinigungsvorrichtung, bei der drei Reinigungseinrichtungen 60 zum Säubern eines Reifens 30 vorgesehen sind. Die Reinigungseinrichtungen 60 sind entlang der Achse der Rollen 40, 50 im Abstand zueinander und in der Höhe versetzt derart angeordnet, daß jeweils die beiden außenliegenden Reinigungseinrichtungen 60 in einer horizontalen Ebene liegen, die höher liegt als die Ebene, in der sich die mittlere Reinigungseinrichtung 60 befindet. Damit ist gewährleistet, daß der gesamte Reifenmantel von den Bürstensegmenten 70 erreichbar ist. Der Abstand der drei einem Reifen 30 zugeordneten Reinigungseinrichtungen 60 zueinander ist so gewählt, daß die Bürstensegmente 70 jeder der drei Reinigungseinrichtungen 60 im betriebsfreien Zustand, d.h. ohne Rollstuhl, wenigstens beim Rotieren der Bürstensegmente 70 sich teilweise überlappen. Auf diese Weise reinigen sich die Bürstensegmente 70 selbst.

Um die Vorrichtung zum Reinigen von Rollstuhlreifen an die unterschiedlichen Abmessungen von Reifen anpassen zu können, sind Positioniereinrichtungen (nicht gezeigt) vorgesehen, die die Reinigungseinrichtungen 60 unabhängig voneinander in vertikaler und horizontaler Richtung verschieben können.

In Fig. 2 ist ein Führungskörper 80 dargestellt, der bezüglich der Bürstensegmente 70 feststeht. Der Führungskörper 80 weist eine im wesentlichen rechteckige Querschnittsform auf, dessen äußere Enden kegelstumpfförmig ausgebildet sind. Der Führungskörper 80 dient dazu, die Bürstensegmente 70 wenigstens teilweise, auf jeden Fall im Arbeitsbereich, zu führen. Die Längsachse des Führungskörpers 80 verläuft parallel zur Plattform 10. Eine solche Ausgestaltung der Reinigungseinrichtung sorgt für einen Andruck der Bürstensegmente 70 an den zu reinigenden Reifen 30.

Die Betätigung der Reifenreinigungsvorrichtung erfolgt über eine Bedienkonsole 90, die in Fig. 1 gezeigt ist. Insbesondere sind in der Plattform 10 Sensoren angeordnet, die beispielsweise die Abmessungen des Rollstuhlreifens 30 detektieren. Ein in der Bedienkonsole 90 vorgesehener Mikroprozessor spricht auf die Sensorsignale an und veranlaßt die Positioniereinrichtungen, die Reinigungseinrichtungen 70 an die entsprechenden Positionen zu fahren. Über die Bedienkonsole 90 kann der Rollstuhlfahrer beispielsweise manuell die Reinigungszeit vorgeben, die Reinigungseinrichtungen 70 sowie die Antriebsmotoren für die Bürstensegmente 70 ein- und ausschalten. Um den von den Bürstensegmenten 70 gelösten Schmutz aufzufangen, kann eine Auffangwanne in der Plattform 10 und unterhalb der Reinigungseinrichtungen 60 herausnehmbar angeordnet sein.

In Fig. 4 bis 8 ist eine zweite erfindungsgemäße Ausführungsform dargestellt.

Der Hauptunterschied zur ersten Ausführungsform besteht im wesentlichen aus der aus Fig. 4 zu entnehmenden ersten Rundbürste 170, welche anstelle des Reinigungsbandes vorgesehen ist.

Diese sich vorzugsweise über die gesamte Breite erstreckende und entgegen der Drehrichtung des Rollstuhlreifens drehende Rundbürste 170 besteht aus mehreren scheibenförmigen Bürstensegmenten 171. Aufgrund der Breite der Rundbürste 170 wird eine Justierung in Bezug auf die jeweilige Reifenbreite des Rollstuhls nicht mehr benötigt.

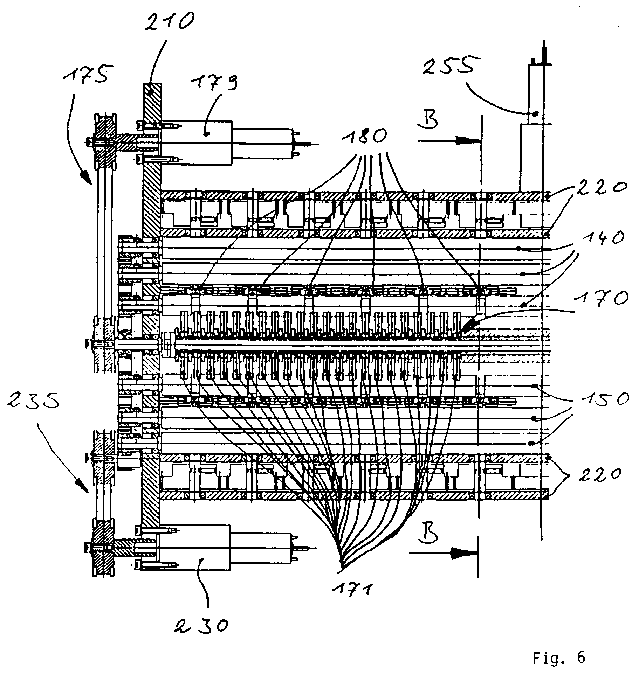

Die Bürste 170 ist mittels eines Riemenantriebs 175 durch den Gleichstrommotor 179 antreibbar. Sowohl der Gleichstrommotor 179 als auch die erste Rundbürste 170 sind an leistenförmigen Längsträgern 210 gehalten, die miteinander jeweils durch Querträger 220 verbunden sind. Da in Fig. 6 nur der linke Teil der zweiten Ausführungsform der erfindungsgemäßen Vorrichtung dargestellt ist, ist der rechte Längsträger 210, der bis auf die Befestigungen der Motoren ansonsten symmetrisch aufgebaut ist, nicht zu erkennen.

Parallel zur ersten Rundbürste 170 erstrecken sich die drehbar gehaltenen und durch den Gleichstrommotor 230 angetriebenen Rollen 140, 150. Die Rollen 140, 150 bestehen aus randrierten Stahlrollen oder sind mit abriebfestem Gummi oder Kunststoff überzogen.

In weiterer, in den Figuren nicht dargestellter Weise umfasst der Antrieb für die Rollen 140 einen zusätzlichen Motor und sind die Rollen 140 nicht mit den Rollen 150 kraftschlüssig gekoppelt. Hierdurch können verschiedene Antriebs-Drehmomente oder -Drehzahlen erzeugt werden, welche die während der Reinigung erwünschte, nach unten gerichtete Krafkomponente erzeugen.

In der in Fig. 6 dargestellten Ausführungsform weisen die Rollen 140, 150 an deren jeweiligen linken Stirnseite Verzahnungen auf und kämmen mit jeweils zwischen den Rollen angeordneten Zahnrädern 240, welche die korrekte Drehrichtung der jeweiligen Rolle erhalten.

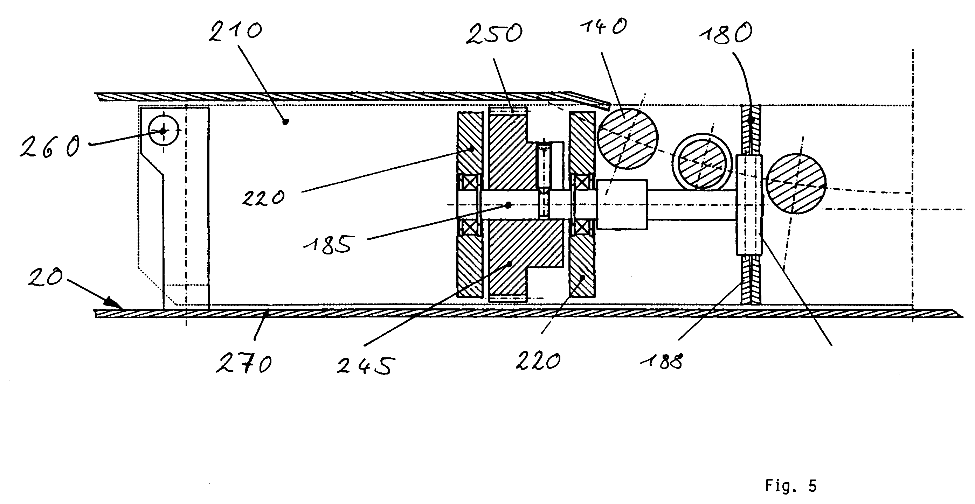

Senkrecht zur ersten Rundbürste 170 sind zweite Rundbürsten 180 angeordnet, deren Welle 185 im Querträger 220 drehbar gehalten ist. Zahnräder 245 oder ein alternativ in Fig. 5 dargestellter Zahnriemen 250 überträgt/übertragen das Antriebs-Drehmoment des Motors 255 auf die Bürsten 180.

Bei Verwendung des Zahnriemens 250 werden die sich geringfügig überlappenden Borstenfelder 188 der zweiten Rundbürsten 180 jeweils gegenläufig miteinander kämmen und weisen hierdurch eine selbstreinigende Wirkung auf.

Die Längsträger 210 sind mittels einer Schwenkverbindung 260 an der Bodenplatte 270 nach oben verschwenkbar gehalten.

In nach oben verschwenkter Stellung sind die jeweiligen Reinigungseinrichtungen zur Reinigung und Wartung leicht zugänglich, und es läßt sich auch die dann freiliegende Mulde 20 auf einfache Weise reinigen.

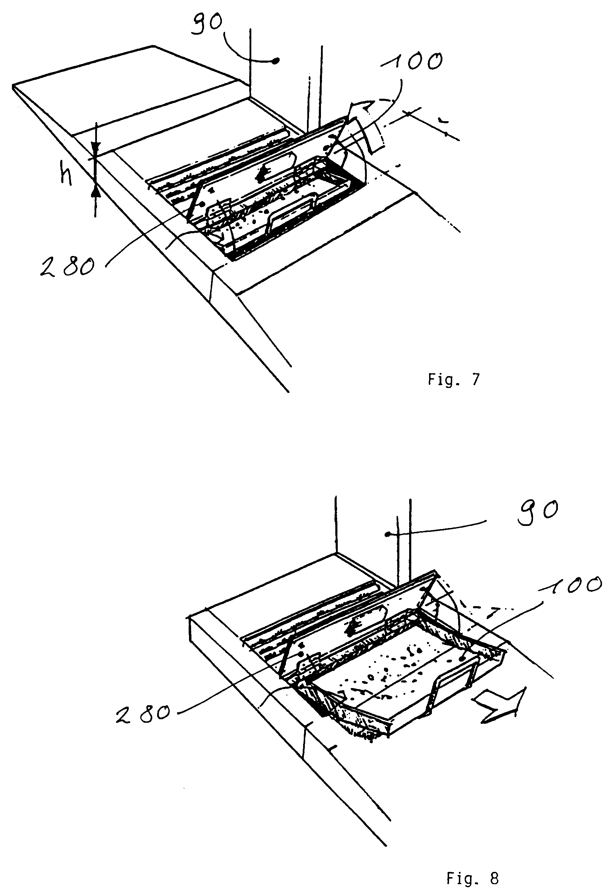

Bei einer alternativen, in den Fig. 7 und 8 dargestellten Ausführungsform ist eine Abdeckplatte 280 nach oben verschwenkbar ausgebildet und gestattet die Entnahme der Auffangwanne 100.

Die Steuerung der Reinigungsvorrichtung wird durch eine in den Figuren nicht dargestellte Steuerungsschaltung 200 bewirkt. Mittels mit dieser verbundener Sensoren 190, die sowohl im Einfahrt- als auch im Ausfahrtbereich sowie dem mittleren, der Reinigung dienenden Bereich der Vorrichtung angeordnet sind, wird durch die Steuerschaltung 200 der Aufenthaltsort eines Rollstuhls erfaßt.

Beim Einfahren in der in Fig. 4 mit einem Pfeil gekennzeichneten Richtung signalisiert der rechte, vorzugsweise als Lichtschranke ausgebildete Sensor 190 den Eintritt und versetzt daraufhin die Steuerschaltung 200 die Rollen 140, 150 in synchrone Drehbewegung, welche ähnlich einer ebenen Rolltreppe den Rollstuhl in die Reinigungsposition bewegt, welche dann durch den mittigen Sensor 190 erfaßt wird.

Nach Erreichen dieser Stellung wird der Antriebsmotor 230 mit einem definierten Drehmoment beaufschlagt versuchen, die Rollen 140, 150 zu drehen. Anhand des dem Gleichstrommotor 230 dabei zugeführten Stroms ist durch dessen Integration über ein definiertes Zeitintervall feststellbar, ob sich die Reifen des Rollstuhls mit dem definiert vorgegebenen Drehmoment drehen lassen.

Nimmt der integrierte Stromwert einen Wert an, der einen vorgegebenen Grenzwert überschreitet, erkennt die Steuerschaltung 200 daran, daß die Reifen des in der Vorrichtung befindlichen Rollstuhls sich nicht drehen ließen und der Rollstuhl folglich elektrisch angetrieben ist.

Daraufhin schaltet die Steuerschaltung 200 den Antriebsmotor 230 stromlos bzw. in seinen Freilaufzustand. Dem Rollstuhlfahrer wird mittels einer an der Konsole 90 angebrachten Leuchte 290 signalisiert, daß er zur Reinigung seinen Rollstuhlantrieb anzuschalten hat.

Überschreitet der integrierte Stromwert nicht den Grenzwert, geht die Steuerschaltung 200 davon aus, daß es sich um einen durch Hand angetriebenen Rollstuhl handelt und es werden die Motore 179, 230, 255 über einen definierten Zeitraum bis zur vollständigen Reinigung der Rollstuhlreifen betrieben. Erfahrungsgemäß reicht hierzu bereits ein Zeitraum von etwa 20 s und vier während dieses Zeitraums durchgeführte vollständige Radumdrehungen zuverlässig aus.

Das Ende des Reinigungsvorgangs wird durch eine weitere, an der Konsole 90 angebrachte Leuchte angezeigt. Während des Reinigungsvorgangs wird die erste Rundbürste 170 in entgegengesetzter Richtung zum Rollstuhlreifen gedreht, so daß auch in Profilrillen des Reifens sitzender Schmutz zuverlässig entfernt wird.

Beim Ein- und Ausfahrvorgang wird jedoch zur Unterstützung auch die erste Rundbürste in der gleichen Drehrichtung wie die Rollen 140, 150 betätigt.

Das Ausfahren wird nach dem Beenden des Reinigungsvorgangs eingeleitet und durch Drehung der Rollen 140, 150 sowie der Rundbürste 170 in Ausfahrtrichtung unterstützt.

Darüber hinaus wird während des Reinigungsvorgangs stetig das Drehmoment der Motore 179, 235 und 255 überwacht und es werden diese bei Überschreiten eines vorgegebenen Grenzdrehmoments abgeschaltet. Hierdurch wird sowohl die Verletzungsgefahr für den Rollstuhlfahrer minimiert als auch eine Überlastung von Teilen der Vorrichtung verhindert.

Zur Sicherung der korrekten Reinigungsfunktion sind die Gleichstrommotore servounterstützt ausgebildet und werden von der Steuerschaltung 200 in ihrer Drehzahl stabilisiert angesteuert.

Als weitere Sicherung befindet sich, vorzugsweise an der Konsole 90 ein großflächiger Not-Ausschalter, mit welchem die Vorrichtung momentan abschaltbar ist.

Um die erfindungsgemäße Vorrichtung auch nachträglich noch ortsfest montieren zu können, beträgt das in Fig. 7 angegebene Maß h lediglich 90 mm. Es ist somit möglich, im jeweiligen Estrich eine entsprechende Ausnehmung zur ortsfesten Montage einzubringen.

In einer alternativen Ausgestaltungsform läßt die Verwendung der Auf- und Abfahrrampen 15 und 18 den Einsatz der erfindungsgemäßen Vorrichtung an nahezu jedem Ort zu.

### Bezugszeichen

- 10: Plattform
- 15: Auf- und Abfahrrampen
- 20: Mulde
- 30: Rollstuhlreifen
- 40: Rollen
- 50: Rollen
- 60: Reinigungseinrichtungen
- 65: Antriebskette
- 70: Reinigungseinrichtungen, Bürstensegmente
- 80: Führungskörper
- 90: Bedienkonsole
- 100: Auffangwanne
- 140: Rollen
- 150: Rollen
- 160: Reinigungseinrichtung
- 170: Rundbürste
- 171: Bürstensegmente
- 175: Riemenantrieb
- 179: Gleichstrommotor
- 180: Rundbürsten
- 185: Welle
- 188: Borstenfelder
- 190: Sensoren
- 200: Steuerungsschaltung
- 210: Längsträger
- 220: Querträger
- 230: Gleichstrommotor
- 240: Zahnräder
- 245: Zahnräder
- 250: Zahnriemen
- 255: Motor
- 260: Schwenkverbindung
- 270: Bodenplatte
- 280: Abdeckplatte
- 290: Leuchte

## Patentansprüche

1. Reifenreinigungsvorrichtung sowohl für elektrisch angetriebene als auch von Hand geschobene Rollstühle umfassend: wenigstens zwei Rollen (40, 50), welche zumindest einen Rollstuhlreifen (30) abstützen, wobei wenigstens eine Rolle (40) zum Rotieren der Reifen (30) wahlweise antreibbar oder in einen Freilaufzustand schaltbar ist, und wenigstens eine, zumindest einem Rollstuhlreifen (30) zugeordnete Reinigungseinrichtung (60).

2. Reifenreinigungsvorrichtung nach Anspruch 1,
dadurch gekennzeichnet,
daß mehrere Rollen (40, 50) paarweise mit zunehmendem Abstand zueinander in einer Mulde (20) in der Plattform (10) angeordnet sind, um Reifen mit unterschiedlichem Durchmesser aufnehmen zu können.

3. Reifenreinigungsvorrichtung nach Anspruch 2,
dadurch gekennzeichnet,
daß jede Rolle (40, 50) wahlweise antreibbar oder freilaufend ist und
daß sich gegenüberliegende Rollen mit unterschiedlicher Drehzahl antreibbar sind, um eine vertikale, zur Plattform (10) gerichtete Kraftkomponente zu erzeugen.

4. Reifenreinigungsvorrichtung nach einem der Ansprüche 1 bis 3, dadurch gekennzeichnet,
daß die Reinigungseinrichtung (60) ein Reinigungsband ist, das entgegengesetzt zu der Drehrichtung der Rollen (40, 50) drehbar ist und den Reifen (30) an seiner untersten Tangente berührt.

5. Reifenreinigungsvorrichtung nach Anspruch 4,
dadurch gekennzeichnet,
daß jedes Reinigungsband aus mehreren auf einer Antriebskette (65) beweglich gelagerten Bürstensegmenten (70) zusammengesetzt ist.

6. Reifenreinigungsvorrichtung nach Anspruch 5,
dadurch gekennzeichnet,
daß die Bürstensegmente (70) einen elliptischen Querschnitt aufweisen und um eine Drehachse rotieren, die senkrecht zur Rollenachse steht.

7. Reifenreinigungsvorrichtung nach einem der Ansprüche 4 bis 6, dadurch gekennzeichnet,
daß jedem Reifen (30) drei Reinigungseinrichtungen (60) zugeordnet sind, die entlang oder Rollenachse im Abstand zueinander und in der Höhe versetzt derart angeordnet sind, daß jeweils die- beiden außenliegenden Reinigungseinrichtungen (60) in einer Ebene liegen, die höher liegt als die der mittleren Reinigungseinrichtung.

8. Reifenreinigungsvorrichtung nach Anspruch 7,
dadurch gekennzeichnet,
daß die Reinigungseinrichtungen (60) derart angeordnet sind, daß die Bürstensegmente (70) von mindestens zwei Reinigungseinrichtungen (60) im betriebsfreien Zustand wenigstens beim Rotieren sich teilweise überlappen und somit selbstreinigend sind.

9. Reifenreinigungsvorrichtung nach Anspruch 7 oder 8,
dadurch gekennzeichnet,
daß die drei jedem Reifen (30) zugeordneten Reinigungseinrichtungen (60) verstellbar sind, um unterschiedlichen Reifendicken angepaßt werden zu können.

10. Reifenreinigungsvorrichtung nach einem der Ansprüche 1 bis 3, dadurch gekennzeichnet,
daß die Reinigungseinrichtung (160) eine sich im wesentlichen in entgegengesetzer Richtung zum Reifen drehende erste Rundbürste (170) ist.

11. Reifenreinigungsvorrichtung nach Anspruch 10, dadurch gekennzeichnet,
daß die erste Rundbürste (170) im wesentlichen zylindrisch und aus mehreren scheibenförmigen Bürstensegmenten (171) zusammengesetzt ist.

12. Reifenreinigungsvorrichtung nach Anspruch 10 oder 11,
gekennzeichnet durch
weitere zweite Rundbürsten (180), die drehbar derart gehalten sind, daß deren Rotation zu einer Putzwirkung im Seitenwandbereich und/oder unteren Ablaufbereich des Rollstuhlreifens führt.

13. Reifenreinigungsvorrichtung nach einem der Ansprüche 1 bis 12, dadurch gekennzeichnet,
daS eine Bedienkonsole (90) vorgesehen ist, die von einem Rollstuhl aus erreichbar ist.

14. Reifenreinigungsvorrichtung nach einem der vorstehenden Ansprüche, dadurch gekennzeichnet, daß das Ein- und Ausfahren eines Rollstuhls mittels Sensoren (190) erfasst und durch eine $teuerungsschaltung (200) der Reinigungsvorgang ausgelöst und während einer für den Reinigungsvorgang ausreichenden Zeitdauer aufrechterhalten wird.

15. Reifenreinigungsvorrichtung nach einem der vorstehenden Ansprüche, dadurch gekennzeichnet,
daß das Antriebsdrehmoment der Rollen (40, 50; 140, 150) überwacht und bei Überschreiten eines Drehmoment-Grenzwertes deren Antrieb angehalten und/oder deren Freilauf eingeschaltet wird.

16. Reifenreinigungsvorrichtung nach einem der vorstehenden Ansprüche, dadurch gekennzeichnet,
daß zumindest ein Teil der Reinigungsvorrichtungen (60, 160, 170, 171) und/oder der Rollen (40, 50; 140, 150) nach oben verschwenkbar gehalten ist.

17. Reifenreinigungsvorrichtung nach einem der vorstehenden Ansprüche, dadurch gekennzeichnet,
daß eine herausnehmbare Auffangwanne (100) unterhalb der Reinigungseinrichtungen (60) angeordnet ist.

## Claims

1. A tyre cleaning apparatus both for electrically driven and also hand-propelled wheelchairs comprising: at least two rollers (40, 50) which support at least one wheelchair tyre (30), wherein at least one roller (40) is drivable for rotating the tyres (30) or is switchable into a freewheel condition, and at least one cleaning device (60) associated with at least one wheelchair tyre (30).

2. A tyre cleaning apparatus according to claim 1 characterised in that a plurality of rollers (40, 50) are arranged in pairs at increasing spacings relative to each other in a trough (20) in the platform (10) in order to he able to accommodate tyres of different diameters.

3. A tyre cleaning apparatus according to claim 2 characterised in that each roller (40, 50) is selectively drivable or free-wheeling and that oppositely disposed rollers are drivable at different speeds to produce a vertical force component which is directed towards the platform (10).

4. A tyre cleaning apparatus according to one of claims 1 to 3 characterised in that the cleaning device (60) is a cleaning belt which is rotatable in opposite relationship to the direction of rotation of the rollers (40, 50) and which contacts the tyre (30) at its lowermost tangent.

5. A tyre cleaning apparatus according to claim 4 characterised in that each cleaning belt is composed of a plurality of brush segments (70) mounted movably on a drive chain (65).

6. A tyre cleaning apparatus according to claim 5 characterised in that the brush segments (70) are of an elliptical cross-section and rotate about an axis of rotation which is perpendicular to the roller axis.

7. A tyre cleaning apparatus according to one of claims 4 to 6 characterised in that associated with each tyre (30) are three cleaning devices (60) which are arranged along the roller axis at spacings relative to each other and displaced in respect of height in such a way that the respective two outwardly disposed cleaning devices (60) are in a plane which is higher than that of the central cleaning device.

8. A tyre cleaning apparatus according to claim 7 characterised in that the cleaning devices (60) are so arranged that the brush segments (70) of at least two cleaning devices (60) partially overlap in the inoperative condition at least when rotating and are thus self-cleaning.

9. A tyre cleaning apparatus according to claim 7 or claim 8 characterised in that the three cleaning devices (60) associated with each tyre (30) are adjustable in order to be capable of adaptation to different tyre thicknesses.

10. A tyre cleaning apparatus according to one of claims 1 to 3 characterised in that the cleaning device (160) is a first round brush (170) which rotates substantially in the opposite direction to the tyre.

11. A tyre cleaning apparatus according to claim 10 characterised in that the first round brush (170) is substantially cylindrical and is composed of a plurality of disc-shaped brush segments (171).

12. A tyre cleaning apparatus according to claim 10 or claim 11 characterised by further second round brushes (180) which are held rotatably in such a way that rotation thereof results in a cleaning action in the side wall region and/or the lower drain-off region of the wheelchair tyre.

13. A tyre cleaning apparatus according to one of claims 1 to 12 characterised in that there is provided an operating console (90) which can be reached from a wheel chair.

14. A tyre cleaning apparatus according to one of the preceding claims characterised in that the entry and exit movement of a wheelchair is detected by means of sensors (190) and the cleaning operation is triggered off by a control circuit (200) and is maintained for a period of time sufficient for the cleaning operation.

15. A tyre cleaning apparatus according to one of the preceding claims characterised in that the drive torque of the rollers (40, 50; 140, 150) is monitored and when a torque limit value is exceeded the drive of the rollers is stopped and/or the freewheel mode thereof is switched on.

16. A tyre cleaning apparatus according to one of the preceding claims characterised in that at least some of the cleaning apparatuses (60, 160, 170, 171) and/or the rollers (40, 50; 140, 150) are mounted pivotably upwardly.

17. A tyre cleaning apparatus according to one of the preceding claims characterised in that a removable catch trough (100) is arranged beneath the cleaning devices (60).

## Revendications

1. Dispositif de nettoyage de pneus pour fauteuils roulants électriques ou à déplacement manuel, comprenant:
deur galets (40, 50) au minimum, lesquels supportent au moins une roue de fauteuil (30), un galet (40) au moins pouvant à volonté être actionné pour une rotation de la roue (30) ou bien commuté sur course libre, ainsi qu'au minimum un dispositif de nettoyage (60) pour une roue de fauteuil au moins (30).

2. Dispositif de nettoyage de pneus selon revendication 1,
**caractérisé en ce que**
plusieurs galets (40, 50) sont disposés par paires et à distance croissante l'une de l'autre dans un renfoncement (20) de la plate-forme (10), afin de pouvoir soutenir des roues de différents diamètres.

3. Dispositif de nettoyage de pneus selon revendication 2,
**caractérisé en ce que**
chaque galet (40, 50) peut à volonté être commuté sur rotation ou course libre, et que des galets opposés peuvent être commutés sur des vitesses différentes, afin d'obtenir une composante verticale de forces, orientée vers la plate-forme (10).

4. Dispositif de nettoyage de pneus selon l'une des revendications 1 à 3,
**caractérisé en ce que**
le dispositif de nettoyage (60) est une bande de nettoyage, tournant en sens contraire au sens de rotation des galets (40, 50) et présentant une surface de contact avec la roue (30) sur sa tangente inférieure.

5. Dispositif de nettoyage de pneus selon revendication 4,
**caractérisé en ce que**
chaque bande de nettoyage est composée de plusieurs brosses segmentées (70) à logement mobile sur une chaîne d'entraînement (65).

6. Dispositif de nettoyage de pneus selon revendication 5,
**caractérisé en ce que**
les brosses segmentées (70) présentent une section elliptique et tournent autour d'un axe de rotation perpendiculaire à l'axe de galet.

7. Dispositif de nettoyage de pneus selon l'une des revendications 4 à 6,
**caractérisé en ce que**
trois dispositil's de nettoyage (60) sont prévus pour chaque roue (30), disposés à intervalle l'un de l'autre le long de l'axe de galet et décalés en hauteur de sorte que les deux dispositifs de nettoyage (60) extérieurs sont situés respectivement sur un plan plus élevé que celui du dispositif de nettoyage médian.

8. Dispositif de nettoyage de pneus selon revendication 7,
**caractérisé en ce que**
les dispositifs de nettoyage (60) sont disposés de sorte que les brosses segmentées (70) d'au minimum deux dispositifs de nettoyage (60) à l'état hors service se chevauchent partiellement au moins pendant la rotation et sont par à autonettoyantes.

9. Dispositif de nettoyage de pneus selon revendication 7 ou 8,
**caractérisé en ce que**
les trois dispositifs de nettoyage (60) prévus pour chaque roue (30) sont ajustables en vue de pouvoir être adaptés à différentes épaisseurs de pneu.

10. Dispositif de nettoyage de pneus selon l'une des revendications 1 à 3,
**caractérisé en ce que**
le dispositif de nettoyage (160) est une première brosse circulaire (170) dont le sens de rotation est essentiellement contraire au sens de rotation de la roue.

11. Dispositif de nettoyage de pneus selon revendication 10,
**caractérisé en ce que**
la première brosse circulaire (170) est essentiellement cylindrique et composée de plusieurs brosses segmentées (171) en forme de disques.

12. Dispositif de nettoyage de pneus selon revendication 10 ou 11,
**caractérisé par**
d'autres brosses secondaires (180) rotatives et logées de sorte que leur rotation entraîne un effet de nettoyage sur la zone latérale et/ou sur la bande d'usure du pneu de fauteuil roulant.

13. Dispositif de nettoyage de pneus selon l'une des revendications 1 à 12,
**caractérisé en ce qu'**
une console de commande (90) est prévue, accessible depuis le fauteuil roulant.

14. Dispositif de nettoyage de pneus selon l'une des revendications précédentes,
**caractérisé en ce que**
le placement et le dégagement d'un fauteuil roulant est indiqué au moyen de détecteurs (190), qu'ils sont provoqués par une commutation de commande (200) du processus de nettoyage, et que le placement est maintenu pendant une durée suffisante pour le processus de nettoyage.

15. Dispositif de nettoyage de pneus selon l'une des revendications précédentes,
**caractérisé en ce que**
le couple d'entraînement des galets (40, 50; 140, 150) est contrôlé, et que le dépassement d'une valeur-limite du couple d'entraînement provoque l'arrêt de l'entraînement des galets et/ou leur commutation sur course libre.

16. Dispositif de nettoyage de pneus selon l'une des revendications précédentes,
**caractérisé en ce que**
une partie au moins des dispositifs de nettoyage (60, 160, 170, 171) et/ou des galets (40, 50; 140, 150) sont logés de manière à pouvoir pivoter vers le haut.

17. Dispositif de nettoyage de pneus selon l'une des revendications précédentes,
**caractérisé en ce qu'**
un bat amovible de réception (100) est disposé sous les dispositifs de nettoyage (60).
